# EUROPÄISCHE PATENTSCHRIFT

(11) **EP 1 353 081 B1**
(45) Veröffentlichungstag und Bekanntmachung des Hinweises auf die Patenterteilung: **19.01.2005**
(21) Anmeldenummer: 03007740.8
(22) Anmeldetag: 04.04.2003
(51) Int. Cl.: F16B 41/00

(54) **Verbindungselement mit einer Schraube und einem daran unverlierbar angeordneten Stützelement**
Connecting device with a screw and a supporting element captive arranged to it
Raccord avec une vis et captif un élément de soutien disposé

(30) Priorität: 11.04.2002 DE 10215883
(43) Veröffentlichungstag der Anmeldung: 15.10.2003
(73) Patentinhaber: Kamax-Werke Rudolf Kellermann GmbH & Co. KG, 37520 Osterode am Harz (DE)
(72) Erfinder: Deeg, Wolfgang, 35315 Homberg/Ohm (DE); Freidhof, Gerhard, 36304 Alsfeld (DE); Hohl, Jürgen, 35274 Kirchhain (DE)
(74) Vertreter: Patentanwälte Rehberg + Hüppe

(56) Entgegenhaltungen:
- DE-A- 19 534 034
- DE-C- 19 750 658
- US-A- 4 212 224
- US-B1- 6 227 783

## Beschreibung

Die Erfindung betrifft ein Verbindungselement mit einer Schraube und einem daran unverlierbar und in der Regel drehbar angeordneten Stützelement, wie Hülse, Unterlegscheibe o. dgl. Solche Verbindungselemente aus mindestens zwei Teilen, die unverlierbar aneinander gehalten sind, werden in Serie hergestellt, um einen hohen Vorfertigungsgrad zu erzielen und damit letztlich die Montage mit Hilfe des jeweiligen Verbindungselements einfacher und schneller gestalten zu können. Die Schraube besteht in aller Regel aus Metall, ebenso auch das Stützelement. Die Erfindung lässt sich aber auch bei Sonderausführungen anwenden, bei denen zumindest eines der Elemente beispielsweise aus Kunststoff ausgebildet sein kann.

Ein zweiteiliges Verbindungselement ist aus der DE 199 24 502 A1 bekannt. Das eine Element des Verbindungselements ist eine Schraube, die einen Kopf mit einer Kopfauflagefläche und einen Schaft aufweist. Der Schaft ist in einen zylindrischen Schaftabschnitt und einen mit Gewinde versehenen Gewindeabschnitt unterteilt, wobei der Schaftabschnitt kopfseitig, also dem Kopf bzw. der Auflagefläche des Kopfes der Schraube zugekehrt, angeordnet ist, während der Gewindeabschnitt mehr oder weniger am freien Ende des Schaftes der Schraube angeordnet ist. Selbstverständlich kann der Gewindeabschnitt auch in einem Mittelbereich angeordnet sein, wenn die Schraube endseitig z. B. einen Zentrieransatz o. dgl. besitzt. Als Stützelement kann eine Hülse, eine Unterlegscheibe o. dgl. vorgesehen sein. Das Stützelement kann auch aus mehreren solcher Elemente zusammengesetzt sein. Auf jeden Fall besitzt das Stützelement eine Engstelle, die einen kleineren Durchmesser aufweist, als es dem Außendurchmesser des Gewindeabschnitts entspricht. Die Engstelle kann nun wiederum auf sehr verschiedene Weise realisiert werden, beispielsweise durch Einprägungen auf dem Umfang der Hülse oder durch einen nach innen vorstehenden umlaufenden Wulst. Auch die Einfügung zusätzlicher Elemente, beispielsweise in Form eines Sicherungsrings, in den Innendurchmesser der Hülse ist möglich. Bei Verwendung einer Unterlegscheibe als Stützelement bildet die Bohrung der Unterlegscheibe die Engstelle, stellt also gleichsam eine umlaufende, nach innen vorspringende Wulst dar. Der Schaftabschnitt besitzt einen vergleichsweise reduzierten Durchmesser, also einen Durchmesser, der auf jeden Fall kleiner als der Außendurchmesser und kleiner als der Kerndurchmesser des Gewindes auf dem Gewindeabschnitt ausgebildet ist.

Weitere zweiteilige Verbindungselemente sind aus der DE 197 50 658 C1, der US 6,227,783 B1 und dem DE-U-69 06 647 bekannt. Die Schraube weist einen Schaft mit einem Schaftabschnitt und einem Gewindeabschnitt auf, wobei der Schaftabschnitt einen Durchmesser besitzt, der kleiner oder gleich dem Kerndurchmesser des Gewindeabschnitts ist. Der Gewindeabschnitt ist damit voll überschraubbar ausgebildet und weist keinen Gewindeauslauf auf. Nach dem Überschrauben des Gewindeabschnitts mit einem Stützelement in Form einer Hülse mit Innengewinde werden die einander zugekehrten Anfänge des Außengewindes und des Innengewindes durch Aneinanderpressen plastisch so verformt, dass die Unverfierbarkeit sichergestellt ist und eine flächige Anlage zwischen Schraube und Stützelement auftritt.

Wenn der reduzierte Durchmesser des Schaftabschnitts z. B. dem Rolldurchmesser der Schraube bei ihrer Herstellung entspricht und ein Gewinde auf den Schaft einer Schraube aufgebracht, insbesondere aufgerollt wird, so ist dies nur möglich unter gleichzeitiger Erzeugung eines kopfseitigen Gewindeauslaufs. Im Bereich dieses kopfseitigen Gewindeauslaufs vergrößert sich der Außendurchmesser des oder der Gewindegänge z. B. von dem Rolldurchmesser bis auf den Außendurchmesser des Gewindes im Gewindeabschnitt, welches unmittelbar an diesen Auslauf anschließt. Die Normung für den Gewindeauslauf unterscheidet zwischen einem Regelfall und einer so genannten kurzen Ausbildung. Im Regelfall erstreckt sich der Gewindegang mit sich veränderndem Außendurchmesser über 2,5 Umdrehungen der Schraube, also um 900°. Die kurze Ausbildung eines Gewindeauslaufs sieht hierfür 1,25 Umdrehungen, also 450°, vor. Noch kürzere Gewindeausläufe sind zwar denkbar, lassen sich aber wegen vergleichsweise reduzierter Standzeiten der Gewindewalzwerkzeuge nicht wirtschaftlich herstellen. Im Bereich jedes Gewindeauslaufs - Regelfall oder kurze Ausbildung - ergibt sich an der Schraube ein (konischer) Hüllkegel, mit dem das Stützelement mit seiner Engstelle in Kontakt kommen kann. Stellt man sich die Abwicklung des Gewindegangs des Gewindeauslaufs vor, so ergibt sich eine sehr lange schiefe Ebene mit langsam zunehmender Steigung. Dieser Hüllkegel bzw. diese schiefe Ebene führen dazu, dass das Stützelement im Bereich des Gewindeauslaufs verklemmen kann. Verbindungselemente der in Rede stehenden Art werden insbesondere als Schüttware an Montagestationen eingesetzt. Der Montagestation ist dabei in der Regel eine automatische Zuführungs- bzw. Förderstation vorgeschaltet, die die Verbindungselemente z. B. unter achsweiser Ausrichtung in eine Reihe hintereinander bringt. Solche Fördereinrichtungen arbeiten häufig mit Vibrationsantrieben. Dabei besteht die Gefahr, dass das Stützelement auf der Schraube so festgerüttelt wird, dass das Verbindungselement in der Montagestation nicht mehr montiert werden kann. Aber auch dann, wenn solche Verbindungselemente einzeln ihrer bestimmungsgemäßen Verwendung zugeführt werden, besteht während des Transportes der Verbindungselemente als Schüttgut ebenfalls die Gefahr, dass zumindest bei einigen der Verbindungselemente das Stützelement im Bereich des Gewindeauslaufs einen klemmenden Sitz an der Schraube erhält. Diese Nachteile treten nicht nur dann auf, wenn die Engstellen an den Stützelementen örtlich als Einprägungen über den Umfang vorgesehen sind, sondern auch dann, wenn die Engstellen über den Umfang durchlaufend ausgebildet sind. Bei örtlichen Einprägungen besteht die weitere Gefahr, dass diese Einprägungen in der verklemmten Stellung genau dort festgerüttelt werden, wo sie zwischen zwei benachbarten Gewindegangabschnitten im Bereich des kopfseitigen Gewindeauslaufs eingreifen.

Der Erfindung liegt die Aufgabe zugrunde, ein zumindest zweiteiliges Verbindungselement aus Schraube und Stützelement zu schaffen, bei dem das Stützelement unverlierbar an der Schraube gehalten ist und welches insbesondere bei automatischer Förderung der Verbindungselemente eine deutlich verringerte Neigung zum Festklemmen zeigt.

Erfindungsgemäß wird dies mit einem Verbindungselement mit den Merkmalen des Patentanspruchs 1 erreicht.

Die Erfindung geht von dem Gedanken aus, den kopfseitigen Gewindeauslauf des Gewindes des Gewindeabschnitts, sei es ein langer oder ein kurzer Gewindeauslauf, durch einen Kegel zu umhüllen, der außerhalb der Vertiefungen zwischen den Gewindegängen des Gewindeauslaufs verbleibt. Während im Stand der Technik eine einzelne örtliche Einprägung zumindest teilweise in die Vertiefung zwischen zwei Gewindegängen des Gewindeauslaufs eintreten und sich dort verhaken oder verklemmen kann, ist dies bei einer kegelförmigen Umhüllung nicht möglich. Die Spitzen des oder der Gewindegänge im Gewindeauslauf bilden ihrerseits einen Kegel. Dieser Kegel wird von einem zweiten Kegel umhüllt, der zumindest rudimentär von einzelnen Flächenelementen an dem Stützelement gebildet wird. Es ist natürlich auch möglich, an dem Stützelement einen mehr oder weniger vollständigen Kegelstumpf zu bilden, der die Umhüllung darstellt. Die Kegelwinkel dieser beiden Kegel unterscheiden sich so, dass nur eine punkt- oder allenfalls linienförmige Berührung zwischen dem Stützelement und dem Gewindeauslauf eintritt. Diese Berührung kann zu keiner Verklemmung führen. Die Grenze für die Abstimmung der beiden Kegelwinkel zueinander ist die Selbsthemmung.

Auch die Erstreckung der kegelförmigen Umhüllung in Achsrichtung des Verbindungselements, oder genauer in Kegelrichtung, ist bedeutsam. Sinnvoll ist es, wenn die die kegelförmige Umhüllung des kopfseitigen Gewindeauslaufs bildenden Flächenelemente in axialer Richtung des Verbindungselements eine Länge aufweisen, die dem Mehrfachen der Steigung des Gewindeabschnitts entspricht. Unter dem Mehrfachen der Steigung des Gewindeabschnitts wird eine Länge verstanden, die etwa dem Doppelten bis dem Dreifachen entspricht. Die Untergrenze liegt etwa bei dem Einfachen der Steigung des Gewindeabschnitts. Durch diese axiale Länge der Flächenelemente oder der insgesamt gebildeten Hüllfläche wird bei Anwendung gleicher Kegelwinkel zwar auch die punktförmige oder linienförmige Berührung zwischen den Teilen erhöht. Andererseits ist sichergestellt, dass keine Verklemmung in den Vertiefungen der Gewindegänge des Gewindeauslaufs eintritt.

Besonders sinnvoll ist es, wenn die kegelförmige Umhüllung des kopfseitigen Gewindeauslaufs durch die Flächenelemente einen Kegelwinkel aufweist, der gleich groß oder kleiner als der Kegelwinkel des kopfseitigen Gewindeauslaufs bemessen ist. Wenn die beiden Kegelwinkel übereinstimmen, ergibt sich eine gewindeartig verlaufende Berührlinie, sofern die Spitzen der Gewindegänge im Gewindeauslauf selbst auf einem Kegel liegen. Noch sinnvoller ist es, den Kegelwinkel der Umhüllung kleiner als den Kegelwinkel des kopfseitigen Gewindeauslaufs zu bemessen. In diesem Falle ergibt sich eine angenähert punktförmige Anlage zwischen Schraube und Stützelement, bei der aber ebenfalls keine Verklemmung zwischen den Teilen eintritt.

Sinnvoll ist es, wenn der Kegelwinkel der kegelförmigen Umhüllung des kopfseitigen Gewindeauslaufs etwa im Bereich zwischen 3° und 8° liegt. Hierzu gehört ein Kegelwinkel des Gewindeauslaufs, der in der Regel etwa 8° beträgt. Allzu klein sollte der Kegelwinkel der kegelförmigen Umhüllung aber nicht sein. Eine gute Trennwirkung zwischen Schraube und Stützelement wird dann erreicht, wenn der Kegelwinkel der kegelförmigen Umhüllung des kopfseitigen Gewindeauslaufs etwa 5° beträgt.

Für die Umhüllung des Gewindeauslaufs an der Schraube gibt es verschiedene Realisierungsmöglichkeiten. Bei einer ersten Möglichkeit ist vorgesehen, dass die Flächenelemente durch örtliche Einprägungen an dem Stützelement gebildet sind, die über den Umfang des Stützelements gleichmäßig verteilt angeordnet sind. Es müssen mindestens zwei örtliche Einprägungen, besser drei oder vier Einprägungen, vorgesehen sein. Diese örtlichen Einprägungen werden in der Regel nachträglich angebracht, also nachdem das Stützelement auf der Schraube aufgefädelt wurde. Dabei ergibt sich der Vorteil, dass keinerlei Beeinträchtigung der Oberfläche der Schraube eintritt.

Eine weitere Realisierungsmöglichkeit ergibt sich dadurch, dass die Flächenelemente durch eine umlaufend angeordnete Schrägfläche an dem Stützelement gebildet sind. Eine solche Schrägfläche stellt praktisch einen über den Umfang umlaufend angeordneten Kegelstumpf dar und bildet so die Umhüllung. Diese Schrägfläche stellt, wie auch die Flächenelemente an den Einprägungen eine innen an dem Stützelement liegende Fläche dar, die dem Gewindeauslauf des Gewindeabschnitts der Schraube zugekehrt und zugemessen ist. Eine solche umlaufend angeordnete Schrägfläche kann durch einen Rollvorgang an dem Stützelement gebildet werden. Dies ist insbesondere dann möglich, wenn das Stützelement eine relativ große axiale Länge aufweist, also als eine Hülse o. dgl. ausgebildet ist. Es ist aber auch möglich, dass das die Schrägfläche aufweisende Stützelement scheibenartig ausgebildet ist und von dem nachträglich aufgerollten Gewinde des Gewindeabschnitts unverlierbar gehalten ist. Bei einer solchen scheibenartigen Ausbildung des Stützelements, also mit relativ kurzer axialer Länge, ist es in vielen Fällen nicht möglich, die Schrägfläche oder örtliche Einprägungen nachträglich zu bilden oder anzubringen, nachdem die Schraube und das Stützelement zusammengefügt wurden. Für solche Fälle empfiehlt es sich, das scheibenartige Stützelement vor dem Zusammenfügen fertig zu bearbeiten, auf den Schaft der Schraube zu stecken und an dem Schaft der Schraube das Gewinde des Gewindeabschnitts erst nachträglich aufzurollen. Dies ist besonders einfach möglich, wenn das Stützelement bei seiner scheibenförmigen Ausbildung eine wesentlich geringere axiale Erstreckung besitzt als die axiale Erstreckung des im Durchmesser reduzierten Schaftbereichs, in dem sich das Stützelement bewegen kann.

Das Stützelement kann zur Übertragung einer Axialkraft ausgebildet und dimensioniert sein. Bei einer scheibenartigen Ausbildung des Stützelements ist dies ohnehin der Fall. Aber auch bei einer hülsenartigen Ausbildung des Stützelements kann die Hülse zur Übertragung der Axialkraft dienen und beispielsweise die Einschraubtiefe begrenzen.

Sinnvoll ist es bei Anwendung örtlicher Einprägungen, wenn die örtlichen Einprägungen an dem Stützelement im oberen, dem Kopf der Schraube zugekehrten Bereich der Hülse angeordnet sind. Damit wird der Bewegungsspielraum zwischen Stützelement und Schraube vorteilhaft groß. In der nicht montierten Stellung kann sich das Stützelement über einen großen Bereich des Gewindeabschnitts erstrecken und diesen damit vor Beschädigungen schützen. Es versteht sich, dass die axiale Länge eines hülsenartig ausgebildeten Stützelements auf die axiale Länge des im Durchmesser reduzierten Schaftbereichs der Schraube abgestimmt ist.

Die Erfindung wird anhand verschiedener Ausführungsbeispiele weiter im Detail erläutert und verdeutlicht. Es zeigen:
- Fig. 1: eine erste Ausführungsform des Verbindungselements mit hülsenartigem Stützelement in Seitenansicht,
- Fig. 2: eine zweite Ausführungsform des Verbindungselements mit scheibenartigem Stützelement in Seitenansicht,
- Fig. 3: eine weitere Ausführungsform des Verbindungselements als Teilansicht,
- Fig. 4: eine weitere Ausführungsform des Verbindungselements als Teilansicht,
- Fig. 5: eine vergrößerte Darstellung eines herkömmlichen Gewindeauslaufs und eines Stützelements in Form eines Halbschnitts (Stand der Technik),
- Fig. 6: eine vergrößerte Darstellung der prinzipiellen Umhüllung des Gewindeauslaufs durch das Stützelement im Halbschnitt,
- Fig. 7: eine vergrößerte Darstellung der prinzipiellen Umhüllung des Gewindeauslaufs durch das Stützelement im Halbschnitt mit einer weiteren Besonderheit,
- Fig. 8: die Darstellung einer weiteren Ausführungsform, und
- Fig. 9: eine Weiterbildung der Ausführungsform gemäß Fig. 1.

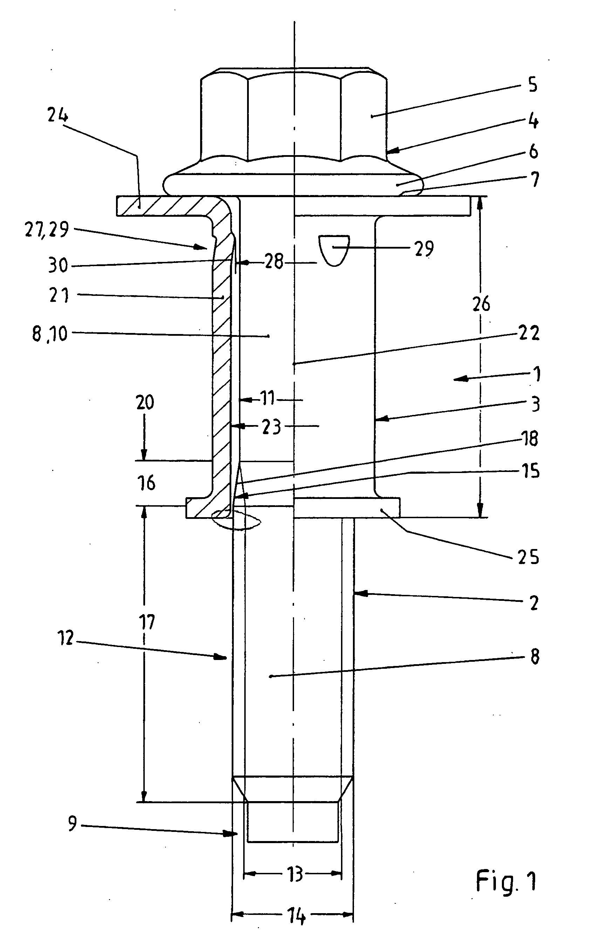

In Fig. 1 ist eine erste Ausführungsform des Verbindungselements 1 dargestellt. Das Verbindungselement 1 ist mindestens zweiteilig ausgebildet und weist als wesentliche Bestandteile eine Schraube 2 und ein Stützelement 3 auf.

Die Schraube 2 ist hier als Bundschraube ausgebildet. Sie besitzt einen Kopf 4 mit einer unrunden Angriffsfläche 5 für ein Verdrehwerkzeug, einen Bund 6, der eine Anlagefläche 7 aufweist, die zur Übertragung einer Axialkraft dient. Im Anschluss an den Kopf 4 bzw. dessen Anlagefläche 7 erstreckt sich ein Schaft 8 bis zum freien Ende 9 der Schraube. Der Schaft 8 kann im Bereich des freien Endes 9 in einen Zentrieransatz übergehen. Der Schaft 8 weist kopfseitig einen Schaftabschnitt 10 auf, der einen im Vergleich zu dem noch zu beschreibenden Gewinde reduzierten Durchmesser 11 besitzt. Endseitig oder dem freien Ende 9 der Schraube 2 zugekehrt weist der Schaft 8 einen Gewindeabschnitt 12 auf. Das Gewinde des Gewindeabschnitts 12 besitzt einen Kerndurchmesser 13 und einen Außendurchmesser 14. Zwischen dem Schaftabschnitt 10 mit dem im Vergleich zum Außendurchmesser 14 des Gewindeabschnitts 12 reduzierten Durchmesser 11 und dem Gewindeabschnitt 12 erstreckt sich ein kopfseitiger Gewindeauslauf 15. Der Gewindeauslauf 15 erstreckt sich in Längsrichtung der Schraube 2 über eine Länge 16, während der Gewindeabschnitt 12 einschließlich eines dem freien Ende 9 zugekehrten Gewindeauslaufs eine Länge 17 aufweist. Aus Fig. 1 ist bereits erkennbar, dass der Gewindeauslauf 15 einen Kegel 18 bildet. Die Gewindeausläufe 15 nach dem Stand der Technik verlaufen an dieser Stelle konisch, besitzen also den Kegel 18, der bei einem langen Gewindeauslauf entsprechend länger als bei einem kurzen Gewindeauslauf gestaltet ist. Der Kegel 18 besitzt üblicherweise einen Kegelwinkel 19 (Fig. 6) in der Größenordnung von etwa 8°. Der reduzierte Durchmessers 11 des Schaftabschnitts 10 liegt regelmäßig zwischen dem Kerndurchmesser 13 und dem Außendurchmesser 14 des Gewindeabschnitts 12. Der Schaftabschnitt 10 erstreckt sich über eine Länge 20, die an der Anlagefläche 7 des Kopfes 4 der Schraube 2 beginnt und an dem Beginn des kopfseitigen Gewindeauslaufs 15 endet. Die Ausbildung der Schraube 2 ist im Vergleich zum Stand der Technik unverändert.

Das in Fig. 1 dargestellte Stützelement 3 ist als Hülse 21 ausgebildet und besitzt eine etwa hohlzylindrisch zu der Achse 22 der Schraube 2 verlaufende Gestalt mit einem Innendurchmesser 23. Der Innendurchmesser 23 ist hier größer als der Außendurchmesser 14 des Gewindeabschnitts 12, so dass die Hülse 21 nach der Formgebung des Gewindes am Gewindeabschnitt 12 auf die Schraube 2 bzw. deren Schaft 8 aufgeschoben werden kann. Die Hülse 21 kann endseitig mit sich radial erstreckenden Flanschen 24 und 25 versehen sein. Die Hülse 21 besitzt eine Länge 26, mit der sie sich in axialer Richtung, also parallel zur Achse 22, erstreckt. Die Länge 26 ist in der Regel größer als die Summe aus den Längen 16 und 20, so dass die Hülse 21 im Bereich des Gewindeauslaufs 15 endet. Die Länge 26 kann aber auch vergleichsweise kürzer ausgebildet sein, wenn eine Überschraubung des Gewindeabschnitts 12 möglich oder vorgesehen ist. Durch die Durchmesserabstimmung ist die Hülse 21 bzw. das Stützelement 3 relativ zur Schraube 2 verdrehbar. Das Stützelement 3 weist eine Engstelle 27 auf, die einen Durchmesser 28 besitzt oder bildet, der kleiner als der Außendurchmesser 14 des Gewindeabschnitts 12 bemessen ist. Die Engstelle 27 kann von mehreren Einprägungen 29 gebildet werden, die nach dem Rollen des Gewindes des Gewindeabschnitts 12 und dem Aufstecken der Hülse 21 auf die Schraube 2 aufgebracht werden. Die Einprägungen 29 weisen bzw. bilden am Innendurchmesser 23 der Hülse 21 Flächenelemente 30, die sich zu einem Hüllkegel 31 (Fig. 6) ergänzen bzw. Bestandteile eines solchen Hüllkegels 31 sind. Der Hüllkegel 31 weist einen Kegelwinkel 32 auf. Die Engstelle 27 kann aber auch auf andere Weise gebildet werden, beispielsweise durch eine umlaufende, nach innen vorspringende Wulst, durch eine Schrägfläche als Bestandteil eines Kegelstumpfs o. dgl..

Die Besonderheit der Erfindung liegt im Bereich der Ausbildung der Einprägungen 29 mit ihren dem Gewindeauslauf 15 der Schraube 2 zugekehrten und zugeordneten Flächenelementen 30 des Hüllkegels 31. Der Hüllkegel 31, der von den Flächenelementen 30 der Einprägungen 28 gebildet wird, hüllt den Kegel 18 des Gewindeauslaufs 15 ein, wie dies aus Fig. 6 erkennbar ist. Der Kegelwinkel 19 des Kegels 18 des Gewindeauslaufs 5 liegt üblicherweise in der Größenordnung von etwa 8°. Der Kegelwinkel 32 des Hüllkegels 31 ist gleich groß oder kleiner bemessen. Fig. 6 zeigt einen kleineren Kegelwinkel 32, der in einem Bereich zwischen 3° bis 8° liegen sollte. Vorteilhaft ist beispielsweise ein Kegelwinkel 32 von 5°. Durch diese relative Ausbildung zueinander zwischen dem Gewindeauslauf 15 und den Einprägungen 29 mit ihren Flächenelementen 30 und dem damit geschaffenen Hüllkegel 31 ergibt sich eine punkt- oder allenfalls linienförmige Anlage des Stützelements 3 an dem Gewindeauslauf 15, wenn das Verbindungselement 1 mit dem Kopf 4 nach oben weisend gefördert wird und das Förderelement an der Anlagefläche 7 des Kopfs 4 angreift. Eine Verklemmung des Stützelements 3 an der Schraube 2 wird mit Sicherheit vermieden. Das Stützelement 3 nimmt während des Montagevorgangs des Verbindungselements 1 ohne weiteres seine ihm zugedachte Relativlage durch Anlage des Flansches 24 an der Anlagefläche 7 ein.

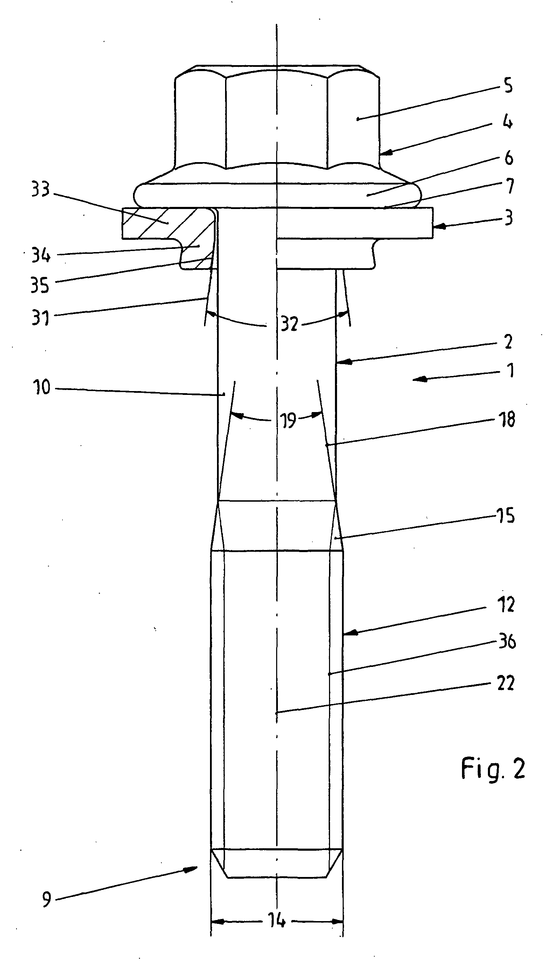

Fig. 2 zeigt eine weitere Ausführungsmöglichkeit des Verbindungselements 1 mit der Schraube 2, bei der das zugeordnete Stützelement 3 in Form einer Scheibe 33 ausgebildet und angeordnet ist. Die Scheibe 33 besitzt einen kragenartigen Fortsatz 34, der sich in axialer Richtung erstreckt und der innen eine umlaufende Schrägfläche 35 aufweist, die den Flächenelementen 30 der Ausführungsform gemäß Fig. 1 vergleichbar ist und ebenfalls auf dem Hüllkegel 31 mit dem Kegelwinkel 32 liegt.

Die Herstellung des Verbindungselements gemäß Fig. 2 geschieht vorteilhaft wie folgt: Die Schraube 2 wird zunächst als separates Teil hergestellt, wobei der Schaft 8 über seine gesamte Länge lediglich den Rolldurchmesser erhält. Das Stützelement 3 wird in Form der Scheibe 33 vollständig fertig bearbeitet, beispielsweise auch in der Oberflächenbeschaffenheit fertiggestellt, einschließlich der Schrägflächen 35. Sodann wird das Stützelement 3 auf den Schaft 8 der Schraube 2 aufgesteckt und erst anschließend im Bereich des Gewindeabschnitts 12 ein Gewinde 36 einschließlich des Gewindeauslaufs 15 aufgerollt oder aufgewalzt. Durch die Ausbildung der Gewindegänge des Gewindes 36 ergibt sich eine Materialverdrängung am Schaft 8 der Schraube 2 in radialer Richtung nach außen, so dass der Außendurchmesser 14 des Gewindeabschnitts 12 entsteht, der nunmehr größer als der Innendurchmesser der Scheibe 33 bemessen ist. Damit ist das Stützelement 3 auch hier drehbar und unverlierbar an der Schraube 2 befestigt. Das Aufrollen des Gewindes 36 ist dann besonders einfach herstellbar, wenn die Scheibe 33 nur eine vergleichsweise kurze axiale Erstreckung besitzt und jedenfalls insoweit kürzer bemessen ist als der im Durchmesser reduzierte Schaftabschnitt 10 des Schafts 8.

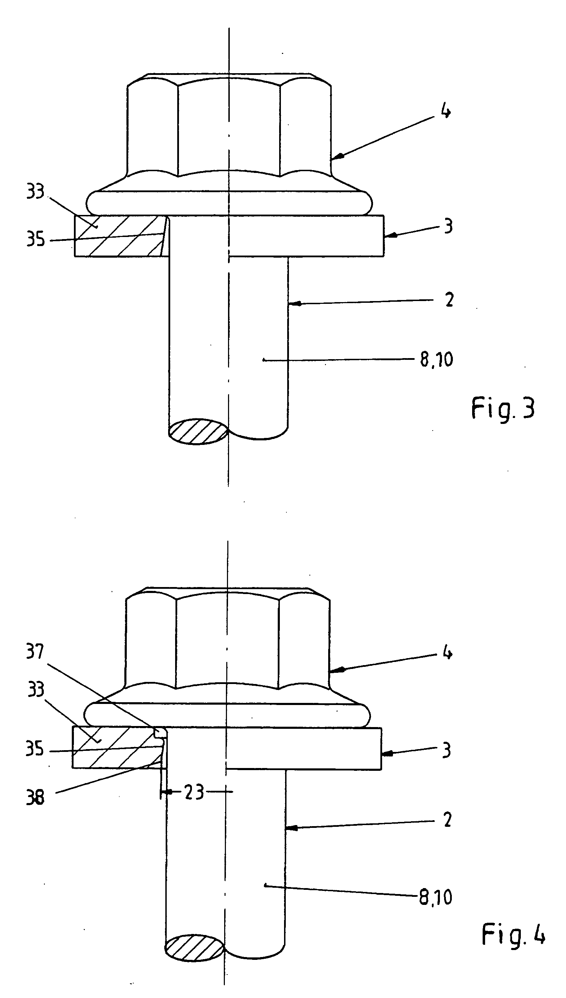

Die Ausführungsformen der Fig. 3 und 4 zeigen ebenfalls Stützelemente 3 in der Ausbildung als Scheiben 33, insbesondere als Unterlegscheiben, also ohne einen kragenartigen Fortsatz 34 (Fig. 2). Gemäß Fig. 3 erstreckt sich die Schrägfläche 35 an der Scheibe 33 über die gesamte Dicke der Scheibe 33. Die Scheibe 33 besitzt damit eine kegelförmige Durchbrechung, die auch hier Bestandteil des Hüllkegels 31 ist. Bei der Ausführungsform gemäß Fig. 4 erstreckt sich die Schrägfläche 35 nur in einem Mittelbereich der axialen Erstreckung der Scheibe 33. An der dem Kopf 4 der Schraube zugekehrten Oberseite besitzt die Scheibe 33 eine Ausnehmung 37, die auf den Übergangsradius des Schaftabschnitts 10 zur Anlagefläche 7 abgestimmt ist. Die Schrägfläche 35 kann direkt in die Unterseite der Scheibe 33 übergehen oder, wie hier dargestellt, in einen zylindrischen Abschnitt 38 einmünden, dessen Innendurchmesser größer als der Außendurchmesser des Gewindeabschnitts sein muss, damit der zylindrische Abschnitt 38 auf demGewindeauslauf 15 nicht verklemmt.

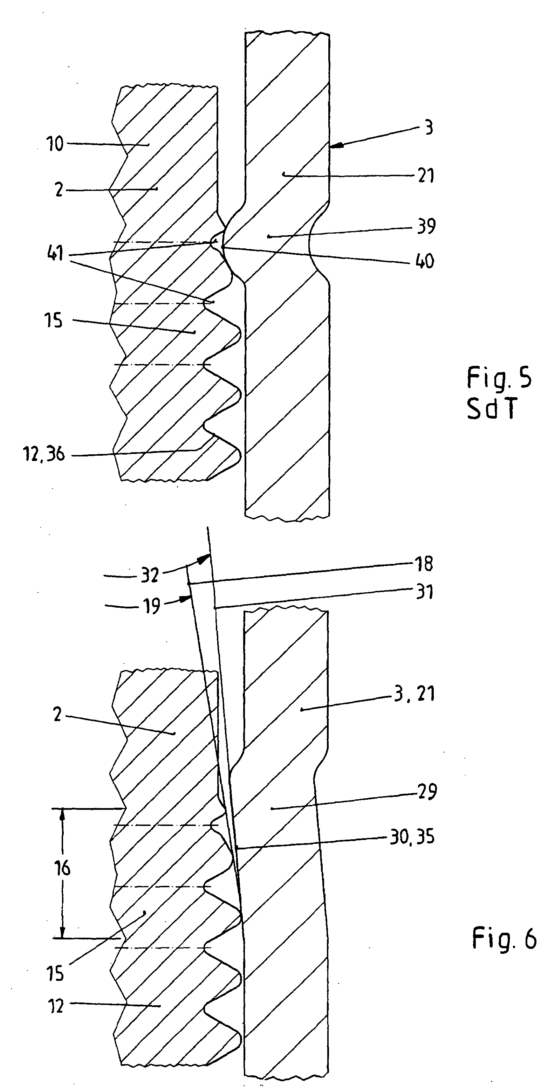

Fig. 5 verdeutlicht noch einmal den Stand der Technik anhand eines Halbschnitts. Es ist eine vergrößerte Darstellung eines Teils der Schraube 2 mit dem Gewindeauslauf 15 und dem Gewinde 36 des Gewindeabschnitts 12 dargestellt. Der Gewindeauslauf 15 erstreckt sich in axialer Richtung zwischen dem im Durchmesser reduzierten Schaftabschnitt 10 und dem Gewindeabschnitt 12. In Zuordnung dazu ist ein Teil einer Hülse 21 bzw. eines Stützelements 3 dargestellt. Das Stützelement 3 besitzt etwa im Mittelbereich seiner axialen Erstreckung über den Umfang verteilt angeordnete Einprägungen 39, die radial nach innen von außen angebracht werden. Die Einprägungen 39 besitzen je nach der Ausbildung des Drückwerkzeugs eine radial nach innen vorstehende, etwa kugelartig ausgebildete Oberfläche 40. Die Oberfläche 40 kann auch leicht abgerundet ausgebildet sein. Sie ist im Stand der Technik aber immer so ausgebildet, dass sie zumindest teilweise in eine Vertiefung 41 zwischen zwei benachbarten Gewindegängen des Gewindeauslaufs 15 eingreifen kann, so dass sich das Stützelement 3, wie in Fig. 5 dargestellt, im Bereich des Gewindeauslaufs 15 der Schraube 2 verklemmt bzw. verhakt.

Im Gegensatz dazu verdeutlicht Fig. 6 die erfindungsgemäße Ausbildung mit den Flächenelementen 30 bzw. der Schrägfläche 35 als Bestandteil des Hüllkegels 31 mit seinem insoweit kleineren Kegelwinkel 32. Aus Fig. 6 ist erkennbar, dass hier nur eine punkt- oder allenfalls linienförmige Berührung des Kegels 18 des Gewindeauslaufs 15 stattfindet. Die Grenze für den Kegelwinkel 32 ist die Selbsthemmung. Obwohl in Fig. 6 das Stützelement 3 als Hülse 21 dargestellt ist, gilt für die Ausbildung von Scheiben 33 als Stützelement 3 Entsprechendes.

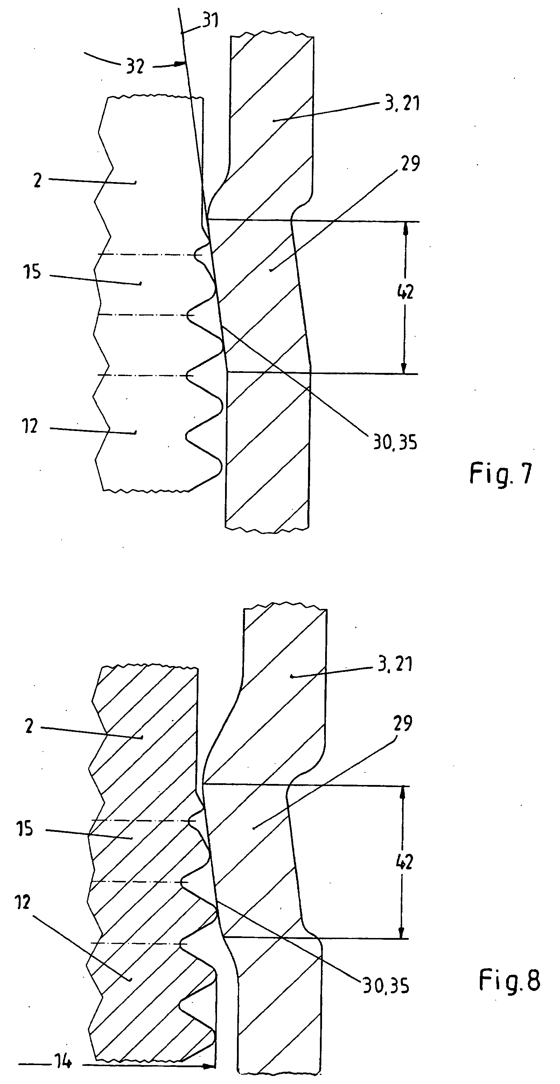

Fig. 7 zeigt eine weitere Ausführungsmöglichkeit. Das Stützelement 3 kann hier örtliche Einprägungen 29 aufweisen, die die Flächenelemente 30 bilden. Gleiches gilt für eine umlaufende wulstartige Verformung mit der Ausbildung einer entsprechenden Schrägfläche 35. Fig. 7 verdeutlicht, dass die Flächenelemente 30 bzw. die Schrägfläche 35 eine axiale Länge 42 aufweisen sollte, die sich genau genommen in Kegelrichtung erstreckt und die nicht kleiner sein sollte, als es der Steigung des Gewindes des Gewindeabschnitts 12 bzw. des Gewindeauslaufs 15 entspricht. Die Steigung im Bereich des Gewindeauslaufs 15 ist durch strichpunktierte Linien verdeutlicht. Die dargestellte Ausführungsform zeigt eine Bemessung, bei der die axiale Länge 42 etwas größer als die zweifache Steigung bemessen ist. Auch hier sind die Flächenelemente 30 bzw. die Schrägfläche 32 Bestandteil des Hüllkegels 31 mit dem Kegelwinkel 32. Die Flächenelemente 30 bzw. die Schrägfläche 35 geht hier an ihrem dem unteren Ende 9 der Schraube 2 zugekehrten Ende unmittelbar in den Innendurchmesser der Hülse 21 bzw. des Stützelements 3 über.

Fig. 8 zeigt eine etwas abgewandelte Ausführungsform. Die Einprägungen 29 mit den Flächenelementen 30 bzw. die umlaufende Wulst mit der Schrägfläche 35 erstreckt sich auch hier axial über die Länge 42. Die radiale Verformung des Stützelements 3 ist hier jedoch etwas weiter getrieben als bei der Ausführungsform gemäß Fig. 7, so dass ein größeren Spiel zwischen der Hülse 21 und dem Außendurchmesser 14 des Gewindes 12 entsteht.

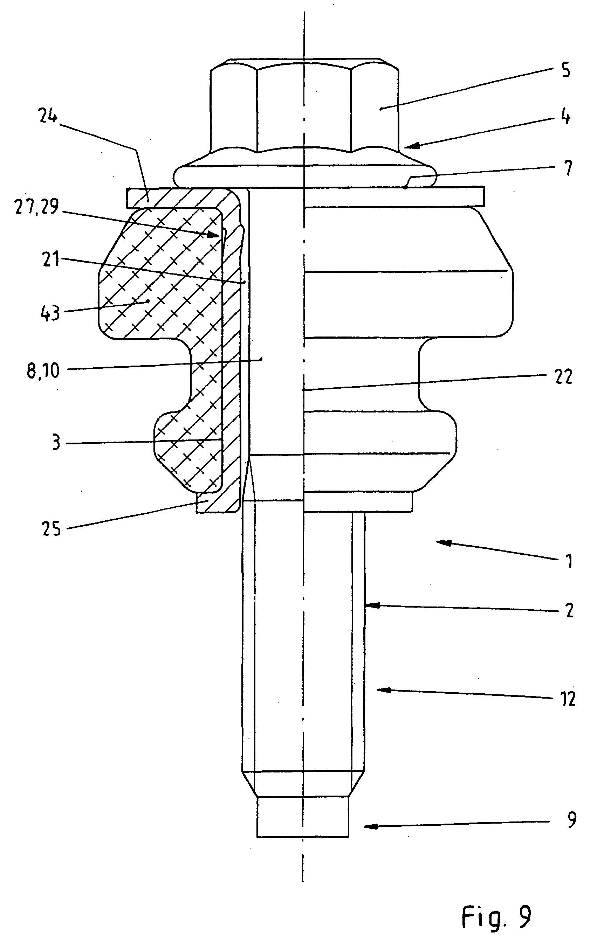

Fig. 9 zeigt eine ähnliche Ausführungsform wie Fig. 1, so dass zunächst auf die diesbezügliche Beschreibung verwiesen werden kann. Auch dieses Verbindungselement 1 weist ein Stützelement 3 mit den beiden Flanschen 24 und 25 auf. Die Flansche 24 und 25 dienen zur Lagerung bzw. Unterbringung eines Elastomerelements 43, welches sich hier über die gesamte Länge zwischen den Flanschen 24 und 25 erstreckt. Damit wird ein Verbindungselement 1 geschaffen, welches der schallisolierten Befestigung dient. Die Auflagerung auf einem Werkstoff erfolgt im Mittelbereich des Elastomerelements 43, so dass die Hülse 3 frei von der Übertragung einer Axialkraft gehalten wird. Das Elastomerelement 43 muss sich nicht über die gesamte Länge zwischen den Flanschen 24 und 25 erstrecken, sondern kann auch vergleichsweise kürzer ausgebildet und angeordnet sein. Weiterhin ist es möglich, die Schraube 2 als Mittelbundschraube auszubilden, also an den Kopf 4 ein weiteres Funktionselement anzuformen. Solche Weiterbildungen sind jedoch auf die vorliegende Erfindung ohne Einfluss.

### BEZUGSZEICHENLISTE

- 1 -: Verbindungselement
- 2 -: Schraube
- 3 -: Stützelement
- 4 -: Kopf
- 5 -: Angriffsfläche
- 6 - Bund
- 7 -: Anlagefläche
- 8 -: Schaft
- 9 -: Ende
- 10 -: Schaftabschnitt

- 11 -: Durchmesser
- 12 -: Gewindeabschnitt
- 13 -: Kerndurchmesser
- 14 -: Außendurchmesser
- 15 -: Gewindeauslauf
- 16 -: Länge
- 17 -: Länge
- 18 -: Kegel
- 19 -: Kegelwinkel
- 20 -: Länge

- 21 -: Hülse
- 22 -: Achse
- 23 -: Innendurchmesser
- 24 -: Flansch
- 25 -: Flansch
- 26 -: Länge
- 27 -: Engstelle
- 28 -: Durchmesser
- 29 -: Einprägung
- 30 -: Flächenelement

- 31 -: Hüllkegel
- 32 -: Kegelwinkel
- 33 -: Scheibe
- 34 -: Fortsatz
- 35 -: Schrägfläche
- 36 -: Gewinde
- 37 -: Ausnehmung
- 38 -: Abschnitt
- 39 -: Einprägung
- 40 -: Oberfläche

- 41 -: Vertiefung
- 42 -: Länge
- 43 -: Elastomerelement

## Patentansprüche

1. Verbindungselement, mit:
einer Schraube (2) mit einem Kopf (4) und einem Schaft (8), auf dem endseitig ein Gewindeabschnitt (12) mit einem Außendurchmesser (14), kopfseitig ein Gewindeauslauf (15) und weiter kopfseitig ein Schaftabschnitt (10) mit einem Durchmesser (11) angeordnet sind, wobei der Gewindeauslauf (15) ausgehend von dem Außendurchmesser (14) des Gewindeabschnitts (12) einen in Richtung auf den Kopf (4) abnehmenden Außendurchmesser und einen in Richtung auf den Kopf (4) zunehmenden Kerndurchmesser aufweist, wobei der Durchmesser (11) des Schaftabschnitts (10) gegenüber dem Außendurchmesser (14) des Gewindeabschnitts (12) reduziert ist, und
einem an der Schraube (2) unverlierbar und in der Regel drehbar angeordneten Stützelement (3), wie Hülse, Unterlegscheibe o. dgl., das eine Engstelle (27) mit einem Durchmesser (28) aufweist, der kleiner als der größte Außendurchmesser des Gewindeauslaufs (15) und größer als der kleinste Außendurchmesser des Gewindeauslaufs (15) ist, wobei die Engstelle (27) an dem Stützelement (3) Flächenelemente (30, 35) aufweist, die sich zu einem Hüllkegel (31) ergänzen,
wobei die den Hüllkegel (31) bildenden Flächenelemente (30, 35) in axialer Richtung des Verbindungselements (1) eine Länge (42) aufweisen, die größer als die Steigung des Gewindeauslaufs (15) ist, und die Flächenelemente (30, 35) und der Gewindeauslauf (15) derart ausgebildet und angeordnet sind, dass sie aneinander unter punkt- oder allenfalls linienförmiger Berührung zur Anlage kommen.

2. Verbindungselement nach Anspruch 1, **dadurch gekennzeichnet, dass** die kegelförmige Umhüllung (31, 32) des kopfseitigen Gewindeauslaufs (15) durch die Flächenelemente (30, 35) einen Kegelwinkel (32) aufweist, der gleich groß oder kleiner als der Kegelwinkel (19) des kopfseitigen Gewindeauslaufs (15) bemessen ist.

3. Verbindungselement nach Anspruch 2, **dadurch gekennzeichnet, dass** der Kegelwinkel (32) der kegelförmigen Umhüllung (31, 32) des kopfseitigen Gewindeauslaufs (15) etwa im Bereich zwischen 3° und 8° liegt.

4. Verbindungselement nach Anspruch 3, **dadurch gekennzeichnet, dass** der Kegelwinkel (32) der kegelförmigen Umhüllung (31, 32) des kopfseitigen Gewindeauslaufs (15) etwa 5° beträgt.

5. Verbindungselement nach Anspruch 1, **dadurch gekennzeichnet, dass** die die kegelförmige Umhüllung (31, 32) des kopfseitigen Gewindeauslaufs (15) bildenden Flächenelemente (30, 35) in axialer Richtung des Verbindungselements (1) eine Länge (42) aufweisen, die dem Mehrfachen der Steigung des Gewindeabschnitts (12) entspricht.

6. Verbindungselement nach einem oder mehreren der Ansprüche 1 bis 5, **dadurch gekennzeichnet, dass** die Flächenelemente (30) durch örtliche Einprägungen (29) an dem Stützelement (3) gebildet sind, die über den Umfang des Stützelements (3) gleichmäßig verteilt angeordnet sind.

7. Verbindungselement nach einem oder mehreren der Ansprüche 1 bis 5, **dadurch gekennzeichnet, dass** die Flächenelemente durch eine umlaufend angeordnete Schrägfläche (35) an dem Stützelement (3) gebildet sind.

8. Verbindungselement nach Anspruch 7, **dadurch gekennzeichnet, dass** das die Schrägfläche (35) aufweisende Stützelement (3, 21) scheibenartig ausgebildet ist und von dem nachträglich aufgerollten Gewinde (36) des Gewindeabschnitts (12) unverlierbar gehalten ist.

9. Verbindungselement nach einem der Ansprüche 1 bis 8, **dadurch gekennzeichnet, dass** das Stützelement (3) zur Übertragung einer Axialkraft ausgebildet und dimensioniert ist.

10. Verbindungselement nach Anspruch 6, **dadurch gekennzeichnet, dass** die örtlichen Einprägungen (29) an dem Stützelement (3) im oberen, dem Kopf (4) der Schraube (2) zugekehrten Bereich der Hülse (21) angeordnet sind.

## Claims

1. Fastener, comprising :
a screw (2) including a head (4), a shank (8), the shank (8) including a threaded portion (12) having an outer diameter (14), a thread runout (15) facing the head, and further facing the head a shank portion (10) having a diameter (11), the thread runout (15) starting from the outer diameter (14) of the threaded portion (12) having a decreasing outer diameter in the direction to the head (4) and an increasing inner diameter in the direction to the head (4), the diameter (11) of the shank portion (10) being reduced in comparison with the outer diameter (14) of the threaded portion (12), and
a supporting element (3), in form of a bush, a washer or the like, being designed and arranged to be captively connected to and rotatably arranged on the screw (2) and including a narrow location (27), having a diameter (28) which is smaller than the largest outer diameter of the thread runout (15) and larger than the smallest outer diameter of the thread runout (15), the narrow location (27) including a surface elements (30, 35) being designed and arranged to form an enveloping cone (18),
the surface elements (30, 35) forming the enveloping cone (18) having a length (42) in axial direction of the fastener (1), the length being greater than the slope of the thread runout (15), the surface elements (30, 35) and the thread runout (15) being arranged and designed to contact each other only in punctual or - at the most - linear way.

2. Fastener of claim 1, **characterized in that** the cone-like enveloping (31, 32) of the thread runout (15) facing the head formed by the surface elements (30, 35) has a cone angle (32), the cone angle (32) being equal or smaller than the cone angle (19) of the thread runout (15) facing the head.

3. Fastener of claim 2, **characterized in that** the cone angle (32) of the cone-like enveloping (31, 32) is approximately between 3° and 8°.

4. Fastener of claim 3, **characterized in that** wherein the cone angle (32) of the cone-like enveloping (31, 32) is approximately 5°.

5. Fastener of claim 1, **characterized in that** the surface elements (30, 35) forming the cone-like enveloping (31, 32) of the thread runout (15) facing the head have a length (42) in axial direction of the fastener (1), the length being a multiple of the slope of the thread portion (12).

6. Fastener of one or more of the claims 1 to 5, **characterized in that** the surface elements (30) are formed by local impressions (29) of the supporting element (3), the local impressions being arranged to be uniformly distributed about the circumference of the supporting element (3).

7. Fastener of one or more of the claims 1 to 5, **characterized in that** the surface elements are formed by a continuous inclined surface (35) being located at the supporting element (3).

8. Fastener of claim 7, **characterized in that** the supporting element (3, 21) including the inclined surface (35) is designed as a disk and is captively connected after rolling the thread (36) to the threaded portion (12).

9. Fastener of one of the claims 1 to 8, **characterized in that** the supporting element (3) is designed and arranged to transmit an axial force.

10. Fastener of claim 6, **characterized in that** the local impressions (29) of the supporting element (3) are located in an upper portion of the bush (21) to face the head (4) of the screw (2).

## Revendications

1. Elément de liaison comportant:
une vis (2) avec une tête (4) et une tige (8) sur laquelle sont disposés côté extrémité un tronçon fileté (12) avec un diamètre extérieur (14), côté tête un filet incomplet (15) et encore côté tête un tronçon de tige (10) avec un diamètre (11), le filet incomplet (15) partant du diamètre extérieur (14) du tronçon fileté (12) présentant un diamètre extérieur diminuant en direction de la tête (4) et un diamètre du noyau augmentant en direction de la tête (4), le diamètre (11) du tronçon de tige (10) étant réduit par rapport au diamètre extérieur (14) du tronçon fileté (12), et
un élément d'appui (3) disposé imperdable sur la vis (2) et en règle générale tournant, tel qu'une douille, une rondelle ou similaire, qui présente un point d'étranglement (27) avec un diamètre (28) qui est inférieur au diamètre extérieur maximal du filet incomplet (15) et supérieur au diamètre extérieur minimal du filet incomplet (15), le point d'étranglement (27) présentant sur l'élément d'appui (3) des éléments de surface (30, 35) qui se complètent en un cône d'enveloppe (31),
les éléments de surface (30, 35) formant le cône d'enveloppe (31) présentant, dans la direction axiale de l'élément de liaison (1), une longueur (42) qui est supérieure au pas du filet incomplet (15), et les éléments de surface (30, 35) ainsi que le filet incomplet (15) étant réalisés et disposés de manière à s'appliquer les uns contre les autres avec un contact ponctuel ou de toute façon en ligne.

2. Elément de liaison selon la revendication 1, **caractérisé en ce que** l'enveloppe (31, 32) de forme conique du filet incomplet (15) côté tête formée par les éléments de surface (30, 35), présente un angle de cône (32) qui est égal ou inférieur à l'angle de cône (19) du filet incomplet (15) côté tête.

3. Elément de liaison selon la revendication 2, **caractérisé en ce que** l'angle de cône (32) de l'enveloppe (31, 32) de forme conique du filet incomplet (15) côté tête se situe approximativement entre 3° et 8°.

4. Elément de liaison selon la revendication 3, **caractérisé en ce que** l'angle de cône (32) de l'enveloppe (31, 32) de forme conique du filet incomplet (15) côté tête est d'environ 5°.

5. Elément de liaison selon la revendication 1, **caractérisé en ce que** les éléments de surface (30, 35) formant l'enveloppe (31, 32) de forme conique du filet incomplet (15) côté tête présentent, dans la direction axiale de l'élément de liaison (1), une longueur (42) qui correspond à plusieurs fois le pas du tronçon fileté (12).

6. Elément de liaison selon une ou plusieurs des revendications 1 à 5, **caractérisé en ce que** les éléments de surface (30) sont formés par des empreintes (29) locales sur l'élément d'appui (3), qui sont uniformément réparties sur le pourtour de l'élément d'appui (3).

7. Elément de liaison selon une ou plusieurs des revendications 1 à 5, **caractérisé en ce que** les éléments de surface sont formés par une surface oblique (35) disposée périphériquement sur l'élément d'appui (3).

8. Elément de liaison selon la revendication 7, **caractérisé en ce que** l'élément d'appui (3, 21), présentant la surface oblique (35), est réalisé à la manière d'une rondelle et est maintenu imperdable par le filetage (36), roulé ultérieurement, du tronçon fileté (12).

9. Elément de liaison selon l'une des revendications 1 à 8, **caractérisé en ce que** l'élément d'appui (3) est réalisé et dimensionné pour transmettre une force axiale.

10. Elément de liaison selon la revendication 6, **caractérisé en ce que** les empreintes (29) locales sur l'élément d'appui (3) sont disposées dans la zone supérieure, tournée vers la tête (4) de la vis (2), de la douille (21).
